# EUROPÄISCHE PATENTANMELDUNG

(11) **EP 0 982 569 A2**
(43) Veröffentlichungstag der Anmeldung: **01.03.2000**
(21) Anmeldenummer: 98123277.0
(22) Anmeldetag: 07.12.1998
(51) Int. Cl.: G01G 5/04

(54) **Waage**

(30) Priorität: 24.08.1998 DE 19838306
(71) Anmelder: Beurer GmbH & Co., D-89077 Ulm (DE)
(72) Erfinder: Wanner, Reinhold, Dipl.-Ing., 89420 Höchstädt (DE)
(74) Vertreter: Fleck, Hermann-Josef, Dr.-Ing.

(57) **Zusammenfassung**

Die Erfindung bezieht sich auf eine Waage mit einem eine Anzeige (6) aufweisenden Oberteil (2), einer auf einer Unterlage aufstellbaren Stützvorrichtung und einer unter dem Oberteil (2) angeordneten, auf eine Gewichtskraft reagierenden Umsetzvorrichtung, die mit der Anzeige gekoppelt ist und mehrere mit einem Fluid gefüllte, durch die Gewichtskraft komprimierbare, fluiddicht umschlossene Räume (14.1) sowie eine Auswerteeinrichtung aufweist, mit der der durch die Gewichtskraft erzeugte Druck erfaßbar und als eine in eine Gewichtsangabe umgeformte Größe zur Anzeige (6) bringbar ist. Ein einfacher, robuster Aufbau sowie zuverlässige Meßergebnisse werden dadurch erzielt, dass die Räume (14.1) über Leitungen (9) mit einer hydraulischen oder pneumatischen Druck-Additionseinrichtung (15) verbunden sind, und dass zum Erfassen des in der Additionseinrichtung (15) gebildeten Drucks nur ein Meßwertaufnehmer vorgesehen ist.

## Beschreibung

Die Erfindung bezieht sich auf eine Waage mit einem eine Anzeige aufweisenden Oberteil, einer auf einer Unterlage aufstellbaren Stützvorrichtung und einer unter dem Oberteil angeordneten, auf eine Gewichtskraft reagierenden Umsetzvorrichtung, die mit der Anzeige gekoppelt ist und mehrere mit einem Fluid gefüllte, durch die Gewichtskraft komprimierbare, fluiddicht umschlossene Räume sowie eine Auswerteeinrichtung aufweist, mit der der durch die Gewichtskraft erzeugte Druck erfaßbar und als eine in eine Gewichtsangabe umgeformte Größe zur Anzeige bringbar ist.

Eine derartige Waage ist in der FR 25 74 539 als bekannt ausgewiesen. Bei dieser bekannten Waage mit einem hydraulischen System sind drei Stützfüße vorgesehen, die das Fluid aufnehmen und miteinander über Leitungen in Verbindung stehen sowie an eine Anzeigevorrichtung angeschlossen sind. Bei einem derartigen Aufbau können sich jedoch ungenaue Messungn ergeben.

Bei einer in der US 4,219,019 angegebenen Waage ist ein einziger balgartiger komprimierbarer Körper zwischen einer Bodenplatte und einer Oberplatte angeordnet. In den Eckpunkten der Waage sind die Oberplatte und die Bodenplatte mittels eines Hebelmechanismus miteinander verbunden. Auch mit derartigen Bälgen ist es schwierig, genaue Meßergebnisse zu erreichen.

Die EP 0 221 736 A2 zeigt eine Waage, bei der ein Fluiddruck in einem flüssigkeitsgefüllten Gehäuse mittels eines Druckaufnehmers umgesetzt und von einem Mikroprozessor ausgewertet wird. Über den inneren Aufbau der Waage an sich sind keine näheren Angaben gemacht.

Bei einer in der US 4,056,156 offenbarten Waage auf der Grundlage des Hydraulikprinzips sind vier Behälter in den Ecken der Waage angeordnet und mit Leitungen verbunden. Auch bei diesem Aufbau tritt die Schwierigkeit auf, zuverlässige Meßergebnisse zu erzielen.

In der DE 89 10 957 U1 ist eine Waage mit einem oder mehreren Druckzylindern angegeben, deren Drücke jeweils mit zugeordneten Meßumformern erfaßt und in elektrische Signale umgewandelt werden. Anschließend erfolgt eine Addition dieser elektrischen Signale. Insbesondere für kleinere Waagen ist dieser Aufbau mit der zugehörigen Auswertung aufwendig.

Eine weitere Waage ist in der DE 41 25 210 A1 angegeben. Bei dieser Waage ist das Innere gegen das Äußere flüssigkeitsdicht beispielsweise mittels einer Balgdichtung abgedichtet. Zwischen einer als Unterteil ausgebildeten Stützvorrichtung und einem Oberteil ist eine Umsetzvorrichtung angeordnet, mit der eine Gewichtskraft in eine Gewichtsangabe umgeformt und zur Anzeige gebracht wird. Die Umsetzvorrichtung weist eine Auswerteeinrichtung mit Kraftsensoren und einem Prozessor auf. Ein derartiger mechanischer Aufbau besitzt zur Kraftübertragung in der Regel relativ viele Einzelteile, wodurch Meßungenauigkeiten z.B. infolge Reibung oder Verschiebung der Einzelteile relativ zueinander auftreten können.

Der Erfindung liegt die Aufgabe zugrunde, eine Waage der eingangs angegebenen Art bereitzustellen, die bei einfachem, robustem Aufbau dauerhaft zuverlässige Meßergebnisse liefert.

Diese Aufgabe wird mit den Merkmalen des Anspruches 1 gelöst. Hiernach ist also vorgesehen, dass die Räume über Leitungen mit einer hydraulischen oder pneumatischen Druck-Additionseinrichtung verbunden sind, und dass zum Erfassen des in der Additionseinrichtung gebildeten Drucks nur ein Meßwertaufnehmer vorgesehen ist.

Untersuchungen der Erfinder haben ergeben, daß mittels der so aufgebauten Additionseinrichtung bei kostengünstigem Aufbau zuverlässige Meßergebnisse erzielt werden. Ist das Fluid eine Flüssigkeit, z.B. ein Öl oder Gel, so ist die Abdichtung einfach. Gleichzeitig wird eine gute Linearität der Meßergebnisse in Abhängigkeit von der Gewichtskraft erzielt, da die Flüssigkeit eine minimale Kompressibilität und auch sehr geringe Temperaturabhängigkeit besitzt.

Ein vorteilhafter, zuverlässiger Aufbau der Additionseinrichtung besteht dabei darin, dass die Additionseinrichtung als weiteren Druckraum eine Kolben-/Zylindereinheit aufweist.

Ist dabei vorgesehen, dass der Kolben-/Zylindereinheit eine Zwischenstufe mit einer der Anzahl der Räume entsprechenden Anzahl von weiteren Kolben-/Zylindereinheiten vorgeschaltet ist, so ergibt sich eine gute Führung des Kolbens in dem weiteren Druckraum der Additionseinrichtung, wobei die Unterbringung der Zwischenstufe und des weiteren Druckraumes mit der zugeordneten Kolben-/Zylindereinheit in einem gemeinsamen Gehäuse untergebracht werden können.

Bei einem Aufbau mit pneumatischer Wirkungsweise wird eine zuverlässige Aufrechterhaltung des erforderlichen Druckes dadurch erzielt, dass bei Ausbildung als pneumatische Additionseinrichtung und/oder Umsetzvorrichtung die Räume und/oder der weitere Druckraum und/oder die Zwischenstufe über eine jeweilige Ventilvorrichtung mit der äußeren Atmosphäre in Verbindung stehen.

Vorteilhafte Ausgestaltungsmöglichkeiten bestehen z.B. darin, daß die Räume mittels eines Kissens oder einer Blase oder eines Balges gebildet sind oder einen durch die Gewichtskraft verstellbaren Kolben aufweisen, wobei das Kissen, die Blase oder der Balg leicht an die jeweilige gewünschte Form angepaßt werden können. Ein Raum mit verstellbarem Kolben kann beispielsweise als übliche Kolben-/Zylindereinheit ausgeführt sein.

Zur Aufnahme des Kissens, der Blase oder des Balges oder des mit dem verstellbaren Kolben versehenen Raumes ist eine Ausführung geeignet, die dadurch gekennzeichnet ist, daß die Stützvorrichtung als plattenförmiges oder wannenförmiges Unterteil mit an seiner Unterseite angeordneten Füßen ausgebildet ist und daß die Räume zwischen dem Oberteil und dem Unterteil angeordnet ist.

Eine Umsetzung der Gewichtskräfte über den Druck in die anzuzeigenden Gewichtsangaben kann vorteilhaft in der Weise erfolgen, daß in der Auswerteeinrichtung den Fluiddrücken entsprechende Gewichtsangaben zur Ausgabe über die Anzeige gespeichert sind oder der Fluiddruck mittels eines Manometers angezeigt wird, das in Gewichtsangaben kalibriert ist. Mittels eines Mikrocontrollers, in dem die Kalibrierwerte gespeichert werden können, können auch weitere Einflußgrößen, wie z.B. Temperatur oder Kompressibilität mit geeigneten Programmen zur Erhöhung der Meßgenauigkeit berücksichtigt werden.

Für eine stabile Lagerung und eine genaue Führung sind weiterhin die Maßnahmen günstig, daß das Oberteil und das Unterteil mittels vertikaler Führungselemente miteinander verbunden sind. Weitere geeignete Führungselemente sind in den Ansprüchen 9 und 10 angegeben.

Bei einer Ausführung der Räume mit verstellbaren Kolben ist auch eine Ausführung in der Weise günstig, daß die Räume im Umfangsbereich unter dem Oberteil angeordneten, teleskopartig verstellbaren Füßen gebildet sind, die die Stützvorrichtung darstellen. Hierdurch erübrigt sich ein separates Unterteil, da die z.B. stempelartigen Füße unmittelbar unter dem Oberteil angebracht werden können.

Die Erfindung wird nachfolgend anhand von Ausführungsbeispielen unter Bezugnahme auf die Zeichnungen näher erläutert. Es zeigen:
- Fig. 1A und 1B: ein erstes Ausführungsbeispiel der Waage in Draufsicht und in geschnittener Vorderansicht,
- Fig. 2A und 2B: ein zweites Ausführungsbeispiel der Waage in Draufsicht und Vorderansicht,
- Fig. 3A und 3B: ein weiteres Ausführungsbeispiel der Waage in Draufsicht und Vorderansicht,
- Fig. 4: eine Scherenführung für eine Waage nach den Fig. 1A bis 2B,
- Fig. 5: eine mechanische Additionsanordnung für die Drücke,
- Fig. 6A: eine weitere mechanische Additionsanordnung für die Drücke, teilweise in geschnittener Seitenansicht,
- Fig. 6B: einen Ausschnitt der Additionsanordnung nach Fig. 6A in Draufsicht,
- Fig. 6C: eine Detailansicht einer Druckkammer,
- Fig. 7: eine Prinzipdarstellung einer Additionsanordnung, die auch elektrisch ausgeführt sein kann, und
- Fig. 8A und 8B: eine Blattfederverbindung zwischen dem Oberteil und dem Unterteil der Waage.

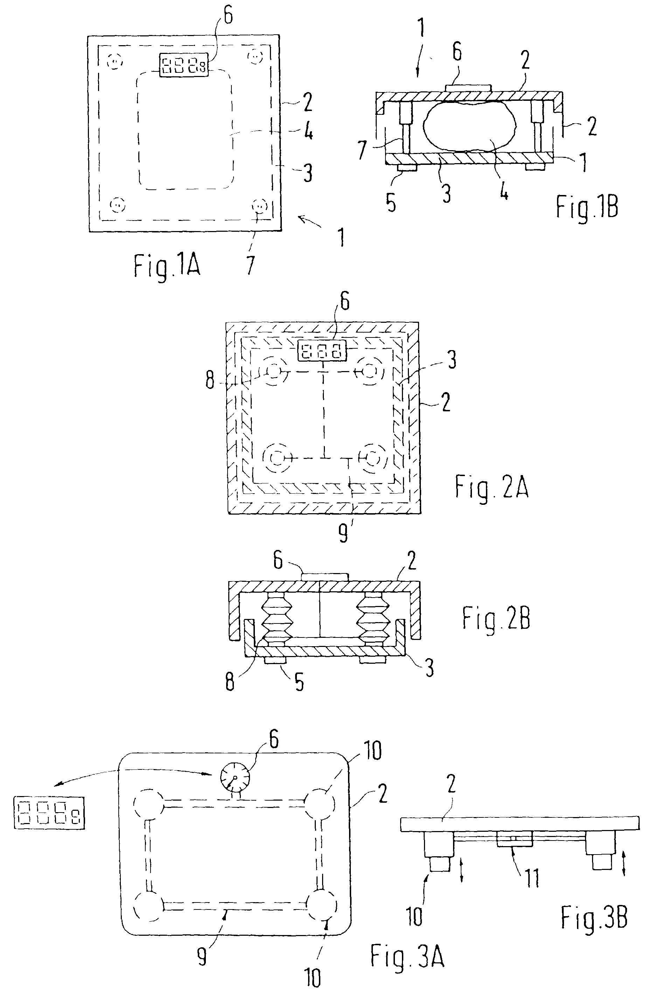

In den Fig. 1A und 1B ist beispielhaft eine Waage 1 mit einem Oberteil 2 und einem Unterteil 3 in Draufsicht und geschnittener Vorderansicht gezeigt. Zwischen dem Oberteil 2 und dem Unterteil 3 sind Blasen oder Kissen 4 angeordnet, die in ihrem Inneren einen mit einem Fluid, d.h. mit einem Gas oder einer Flüssigkeit gefüllten Raum bildet. Das Oberteil 2 und das Unterteil 3 sind mittels vier in den Eckbereichen angeordneter Führungselemente 7 miteinander verbunden, die eine vertikale Verstellung des Oberteils 2 bezüglich des Unterteils 3 ermöglichen. Auf der Unterseite des Unterteils 3 sind Füße 5 angeordnet, die an einem jeweiligen Schaft der Führungselemente 7 angeschlossen sein können. Auf der Oberseite des Oberteils 2 ist eine Anzeige 6 angeordnet, über die das gemessene Gewicht sichtbar gemacht wird.

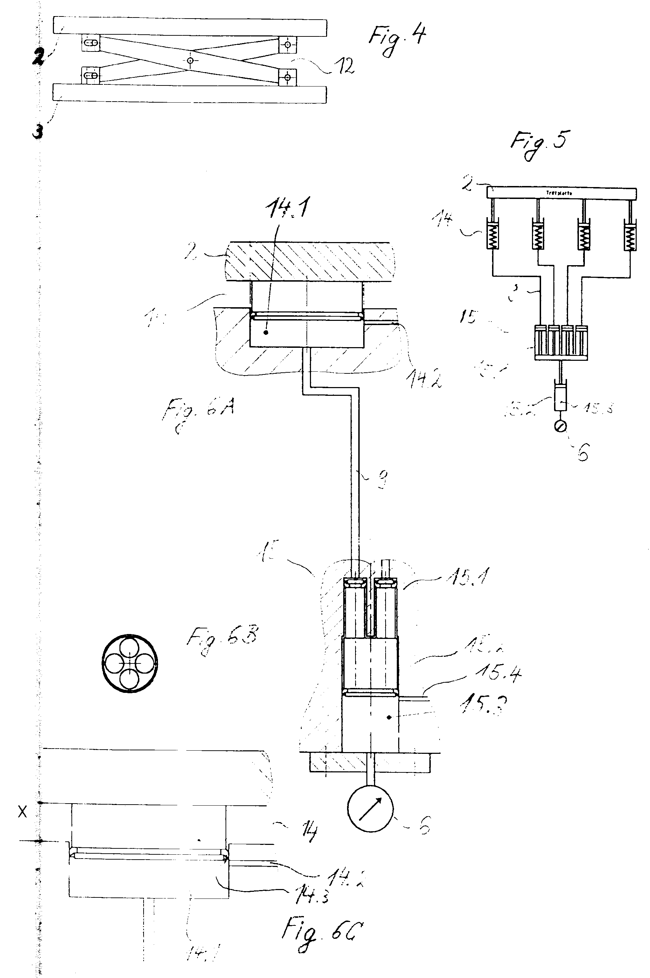

Bei dem in den Fig. 2A und 2B gezeigten Ausführungsbeispiel sind anstelle des Kissens 4 gemäß dem vorstehenden Ausführungsbeispiel etwa in den Eckbereichen vier Bälge 8 vorgesehen, um die fluidgefüllten Räume zu bilden. Die durch die Bälge 8 gebildeten Räume stehen über Leitungen 9, z.B. Schläuchen oder Rohren, miteinander in Verbindung, so daß ein hydraulisches bzw. pneumatisches System mit entsprechender Druckausbreitung gebildet wird. Die Messung des durch eine Gewichtskraft erzeugten Druckes kann an einer gewünschten Stelle mittels eines geeigneten Druckaufnehmers erfolgen. Innerhalb der Bälge 8 können Führungselemente für die vertikale Führung vorgesehen sein oder die vertikale Führung kann mittels separater Elemente erfolgen. Hierbei eignet sich z.B außer einer Linearführung auch eine Scherenführung 12 gemäß Fig. 4.

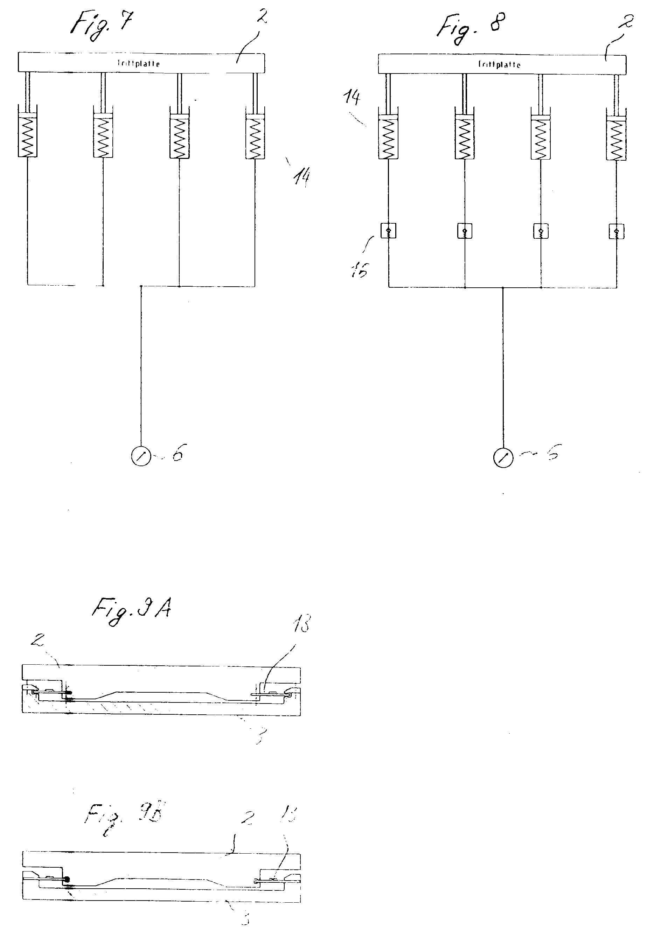

Eine stabile und dabei kostengünstige Führung ergibt sich auch durch die in den Fig. 8A und 8B gezeigten Blattfedern 13, die zum einen an dem Oberteil 2 fest und an dem Unterteil 3 lose und zum anderen an dem Unterteil 3 fest und dem Oberteil 2 lose angebunden und bei einer quadratischen oder rechteckförmigen Waage z.B. in den vier Eckbereichen der Waage 1 angeordnet sind.

Bei dem in den Fig. 3A und 3B dargestellten weiteren Ausführungsbeispiel ist das Oberteil unmittelbar mittels Stempeln 10 abgestützt, die aus zwei teleskopartig ineinander verschiebbaren Teilen bestehen und eine Art Kolben-/Zylindereinheit bilden, um die durch die Gewichtskraft veränderbaren Räume für das Fluid zu erzeugen. Eine Elektronik 11 der Auswerteeinrichtung ist unterhalb des Oberteils 2 angeordnet und kann auch eine Spannungsversorgungseinheit umfassen. Die Stempel 10 sind ebenfalls über Leitungen 9 miteinander verbunden, so daß auch bei diesem Ausführungsbeispiel ein hydraulisches System gebildet ist. An eine Leitung 9 ist ein Druckmesser in Form eines Manometers angeschlossen, das als Anzeige 6 dient und unmittelbar in Gewichtsangaben kalibriert ist. Ein derartiges Manometer kann auch bei den Waagen gemäß den vorstehenden Ausführungsbeispielen verwendet werden, wobei keine Elektronik erforderlich ist, wohl aber vorgesehen sein kann.

Als Fluid ist insbesondere eine Flüssigkeit, z.B. ein biologisch abbaubares Öl, etwa ein Speiseöl geeignet, das in gewünschter Viskosität gewählt werden kann und keine Dichtprobleme ergibt. Beispielsweise kommen Silikonöle, gesättigte und ungesättigte Fettsäureester, gesättigte und ungesättigte Fettsäuren und Parafinöle in Frage. Besonders Silikonöle weisen eine vorteilhafte Langzeit-und Temperaturstabilität auf. All diese Flüssigkeiten sind ungiftig und umweltverträglich. Auch Temperatureinflüsse und Volumenänderungen in Abhängigkeit der Kompressibilität sind bei Flüssigkeiten äußerst gering. Die wenigen Einzelteile ermöglichen einen einfachen, robusten Aufbau, wobei die Anbindung zwischen den Kissen 4 oder den Bälgen 8 und dem Oberteil 2 sowie dem Unterteil 3 mittels eingelegter oder eingegossener Hartplastikscheiben oder Metallscheiben eine stabile Anbindung ergibt.

Ein großer Vorteil ist auch, daß zwischen dem Druck und der Gewichtskraft bzw. Masse ein linearer Zusammenhang besteht. In Messungen der Erfinder hat sich dieser Zusammenhang auch bei den beschriebenen Ausführungsformen der Waage gezeigt.

Verschiedene andere Waagen, wie Babywaagen, Haushaltswaagen oder dgl. sind mit der angegebenen Umsetzeinrichtung aufbaubar.

In Fig. 4 ist als Führung zwischen dem Oberteil 2 und dem Unterteil 3 eine Scherenführung 12 gezeigt, die geringere Reibungen als eine vertikale Führung ergibt.

Eine noch günstigere Führung ohne nennenswerte Reibungsverluste wird durch die in den Fig. 9A und 9B gezeigte Aufhängung mit Biegefedern, insbesondere Blattfedern 13 erzielt. Die Blattfedern 13 sind vorzugsweise in den vier Eckbereichen der Waage angeordnet und können, wie Fig. 9A zeigt, an dem Oberteil 2 fest und an dem Unterteil 3 einsetzbar oder aber, wie Fig. 9B zeigt, an dem Unterteil 3 fest und an dem Oberteil 2 einsetzbar befestigt sein. Die eine Seite der Blattfedern 13 kann dabei auch z.B. an dem Oberteil 2 oder Unterteil 3 durch Ausstanzen einstückig mit diesem hergestellt sein.

Die Fig. 5 bis 8 zeigen verschiedene Ausführungsformen für eine mechanische, d.h. hydraulische oder pneumatische Additionseinrichtung.

Gemäß Fig. 5 sind die unter dem Oberteil 2 angeordneten Umsetzeinrichtungen in Form einer Druckkammeranordnung 14 mit vier Druck-Räumen 14.1 über an den Räumen 14.1 angeschlossene Leitungen 9 mit der Additionseinrichtung 15 verbunden, die ihrerseits aus einer Zwischenstufe 15.1 und einer anschließenden Addierstufe 15.2 mit einem weiteren Druckraum 15.3 ausgerüstet ist. Die Zwischenstufe 15.1 weist ihrerseits eine der Anzahl der Druck-Räume 14.1 entsprechende Anzahl von Kolben-/Zylindereinheiten auf, die an ihrem Ausgang zusammengefaßt sind und mit einer weiteren Kolben-/Zylindereinheit der Addierstufe 15.2 zusammenwirken. Wie die Fig. 6A und 6B zeigen, können die Zwischenstufe 15.1 und die nachgeschaltete Addierstufe 15.2 als Einheit in einem gemeinsamen Gehäuse untergebracht sein, so daß sich nicht nur eine geringe Baugröße, sondern auch eine vorteilhafte Verbindung ohne nennenswerte Reibungsverluste ergibt. Die Fig. 6B zeigt dabei eine Draufsicht der Zwischenstufe 15.1.

Die Fig. 6A, 6B und 6C zeigen außerdem als Beispiel eine pneumatische Umsetzvorrichtung und Additionseinrichtung 15. Um Leckverluste zu vermeiden, stehen sowohl die Druck-Räume 14.1 der Umsetzvorrichtung als auch der weitere Druckraum 15.3 der Additionseinrichtung 15 mit der äußeren Atmosphäre über eine Ventileinrichtung in Verbindung, wobei jeweilige Ausgleichsöffnungen 14.2 bzw. 15.4 in Form von Kanälen nach außen führen. Die Kanäle sind an einen unteren Dichtrand des Kolbens der Umsetzvorrichtung bzw. Additionseinrichtung 15 angrenzend angeordnet, so dass die Druck-Räume 14.1 bzw. der weitere Druckraum 15.3 sogleich von der äußeren Atmosphäre abgetrennt werden, wenn sich die Kolben infolge eines Gewichts auf dem Oberteil 2 nach unten bewegen. Dichtmittel 14.3 am unteren Rand der Kolben vermeiden, dass beim Herabbewegen der Kolben ein Druckverlust in den Druckräumen auftritt.

Entsprechend kann auch die Zwischenstufe 15.1 mit Verbindungen zur äußeren Atmosphäre über Ventile ausgestattet sein.

In Fig. 7 ist die Umsetzvorrichtung mit der Druckkammeranordnung 14 in Verbindung mit der Additionseinrichtung noch einmal schematisch dargestellt.

Mit der Additionseinrichtung werden unterschiedliche Belastungen auf dem Oberteil 2 der Waage kompensiert und stets zuverlässige, reproduzierbare Meßergebnisse erzielt.

## Patentansprüche

1. Waage mit einem eine Anzeige (6) aufweisenden Oberteil (2), einer auf einer Unterlage aufstellbaren Stützvorrichtung und einer unter dem Oberteil (2) angeordneten, auf eine Gewichtskraft reagierenden Umsetzvorrichtung, die mit der Anzeige gekoppelt ist und mehrere mit einem Fluid gefüllte, durch die Gewichtskraft komprimierbare, fluiddicht umschlossene Räume (14.1) sowie eine Auswerteeinrichtung aufweist, mit der der durch die Gewichtskraft erzeugte Druck erfaßbar und als eine in eine Gewichtsangabe umgeformte Größe zur Anzeige (6) bringbar ist,
dadurch gekennzeichnet,
dass die Räume (14.1) über Leitungen (9) mit einer hydraulischen oder pneumatischen Druck-Additionseinrichtung (15) verbunden sind, und
dass zum Erfassen des in der Additionseinrichtung (15) gebildeten Drucks nur ein Meßwertaufnehmer vorgesehen ist.

2. Waage nach Anspruch 1,
dadurch gekennzeichnet,
dass die Additionseinrichtung (15) als weiteren Druckraum (15.3) eine Kolben-/Zylindereinheit aufweist.

3. Waage nach Anspruch 2,
dadurch gekennzeichnet,
dass der Kolben-/Zylindereinheit eine Zwischenstufe (15.1) mit einer der Anzahl der Räume (14.1) entsprechenden Anzahl von weiteren Kolben-/Zylindereinheiten vorgeschaltet ist.

4. Waage nach einem der vorhergehenden Ansprüche,
dadurch gekennzeichnet,
dass bei Ausbildung als pneumatische Additionseinrichtung und/oder pneumatische Umsetzvorrichtung die Räume (14.1) und/oder der weitere Druckraum (15.3) und/oder die Zwischenstufe (15.1) über eine jeweilige Ventilvorrichtung (14.2, 14.3) mit der äußeren Atmosphäre in Verbindung stehen.

5. Waage nach einem der vorhergehenden Ansprüche,
dadurch gekennzeichnet,
dass die Räume (14.1) mittels eines Kissens oder einer Blase (4) oder eines Balges (8) gebildet sind oder einen durch die Gewichtskraft verstellbaren Kolben aufweisen.

6. Waage nach einem der vorhergehenden Ansprüche,
dadurch gekennzeichnet,
dass die Stützvorrichtung als plattenförmiges oder wannenförmiges Unterteil (3) mit an seiner Unterseite angeordneten Füßen ausgebildet ist und
dass die Räume (14.1) zwischen dem Oberteil (2) und dem Unterteil (3) angeordnet sind.

7. Waage nach einem der vorhergehenden Ansprüche,
dadurch gekennzeichnet,
dass in der Auswerteeinrichtung den Fluiddrücken entsprechende Gewichtsangaben zur Ausgabe über die Anzeige (6) gespeichert sind oder die Fluiddrücke mittels eines an die Räume angeschlossenen Manometers angezeigt werden, das in Gewichtsangaben kalibriert ist.

8. Waage nach einem der vorhergehenden Ansprüche,
dadurch gekennzeichnet,
dass das Oberteil (2) und das Unterteil (3) mittels vertikaler Führungselemente (7, 12, 13) miteinander verbunden sind.

9. Waage nach Anspruch 8,
dadurch gekennzeichnet,
dass die Führungselemente eine Scherenführung (12) oder eine Anordnung von Biegefedern bilden.

10. Waage nach Anspruch 9,
dadurch gekennzeichnet,
dass die Biegefedern Blattfedern (13) sind.

11. Waage nach einem der Ansprüche 1 bis 5,
dadurch gekennzeichnet,
dass die Räume in im Umfangsbereich unter dem Oberteil (2) angeordneten, teleskopartig verstellbaren Füßen (10) gebildet sind, die die Stützvorrichtung darstellen.
